# FASCICULE DE BREVET EUROPEEN

(11) **EP 1 486 697 B1**
(45) Date de publication et mention de la délivrance du brevet: **27.06.2007**
(21) Numéro de dépôt: 04291224.6
(22) Date de dépôt: 13.05.2004
(51) Int. Cl.: F16F 9/02, F15B 15/19

(54) **Amortisseur modulable à gaz pyrotechniques**
Modulierbarer Dämpfer mit pyrotechnischen Gasen
Pyrotechnic gas damper with modulated effect

(30) Priorité: 13.06.2003 FR 0307105
(43) Date de publication de la demande: 15.12.2004
(73) Titulaire: SNPE Matériaux Energétiques, 75004 Paris (FR)
(72) Inventeur: Borg, Evrard, 83110 Sanary (FR); D'Emmanuelle, Laurent, 83200 Toulon (FR); Laspesa, Eric, 83140 Six Fours (FR); Nadeau, Jean-Paul, 83190 Ollioules (FR)
(74) Mandataire: Le Roux, Martine

(56) Documents cités:
- EP-A- 0 550 321
- DE-A- 19 945 844
- FR-A- 2 494 664
- US-A1- 2001 035 643

## Description

Le domaine technique de l'invention est celui de la sécurité automobile impliquant des systèmes d'absorption d'énergie, pour amortir par exemple le déplacement de certaines pièces qui ont été mises en mouvement lors d'un choc mécanique du véhicule automobile avec un élément extérieur et qui sont, si elles ne sont pas amorties, susceptibles lors de l'impact de générer des blessures importantes.

Les systèmes d'absorption selon l'invention pourront plus particulièrement être adaptés, par exemple, pour amortir un bouclier d'un véhicule automobile en cas de choc frontal du véhicule à basse vitesse, pour protéger les membres inférieurs d'un occupant d'un véhicule automobile, pour amortir l'impact d'un piéton contre le capot du véhicule, pour limiter de manière modulable, lors d'un l'impact, l'effort exercé par un occupant d'un véhicule automobile sur sa ceinture de sécurité ou pour amortir l'impact du conducteur contre une colonne de direction. Ces différentes pièces, notamment le capot ou la colonne de direction, si elles ne sont pas amorties, peuvent constituer pour le piéton ou le conducteur une butée fixe apte à devenir lors de l'impact une source de blessures importantes.

Les dispositifs d'absorption d'énergie ont déjà fait l'objet de plusieurs demandes de brevet.

La demande de brevet EP 0550 321 concerne un vérin pyrotechnique à course amortie pouvant être utilisé dans tout type de système d'absorption d'énergie. Ce vérin comporte un générateur de gaz pyrotechnique, un piston, une chambre de combustion de matières pyrotechniques et une chambre de contre-pression ainsi qu'une chambre intermédiaire comprise entre ladite chambre de combustion et une extrémité du piston. Un canal relie la chambre intermédiaire à la chambre de contre-pression. Les gaz émis par le générateur mettent sous pression la chambre intermédiaire pour s'opposer au mouvement du piston et ainsi amortir sa course, une partie desdits gaz étant acheminée par le canal vers la chambre de contre-pression.

Les systèmes d'absorption d'énergie selon l'invention possèdent un générateur de gaz pyrotechnique pouvant délivrer une quantité variable de gaz permettant aux dits systèmes de tenir compte de certains paramètres comme la vitesse du véhicule au moment du choc et la morphologie du conducteur. Ils s'adaptent donc facilement à un grand nombre de configurations. De plus, ils sont dotés d'un dispositif permettant de réguler la pression dans la chambre d'amortissement, ce qui les rend particulièrement performants et fiables.

L'objet de la présente invention concerne un système d'absorption d'énergie pour dispositif de sécurité dans un véhicule automobile comprenant un générateur de gaz pyrotechnique et un piston de coulissement pouvant se déplacer dans une chambre d'amortissement, ledit générateur étant apte à libérer des gaz dans ladite chambre pour amortir le piston, ce système étant caractérisé en ce que le générateur de gaz délivre une quantité variable de gaz et en ce que la chambre d'amortissement comporte un dispositif de régulation de pression qui se déclenche au delà d'une pression seuil atteinte dans ladite chambre.

Le système selon l'invention pourra être placé par exemple entre le bouclier d'un véhicule automobile et la structure porteuse du bouclier pour amortir le mouvement du bouclier en cas de choc frontal du véhicule. Lors de l'accident, le bouclier avance grâce à un dispositif spécifique, par exemple muni d'actionneurs pyrotechniques, et est ensuite amorti par le système d'absorption selon l'invention. Ceci permettra notamment, lorsque le choc se produit à basse vitesse, d'éviter la déformation du châssis et ainsi de réduire les coûts de remise en état du véhicule après l'accident.

Le système selon l'invention pourra également être utilisé pour amortir le mouvement d'un capot d'un véhicule automobile suite à l'impact d'un piéton contre ledit capot. Dans ce dernier cas, lorsque le véhicule automobile percute un piéton de manière frontale, le capot du véhicule se soulève d'une certaine hauteur en pivotant autour d'un axe de rotation placé vers l'avant du véhicule. En règle générale, le piéton bascule et vient percuter le capot du véhicule. Le système d'absorption selon l'invention placé sous le capot permet d'amortir le mouvement du capot créé par l'impact du piéton contre ledit capot. Le système selon l'invention pourra également être utilisé pour protéger les membres inférieurs d'un occupant d'un véhicule automobile en plaçant ledit système derrière la planche de bord du véhicule ou pour limiter de manière modulable l'effort exercé par un occupant d'un véhicule automobile sur sa ceinture de sécurité lors d'un impact ou pour amortir l'impact du conducteur contre la colonne de direction lors d'une collision.

Les systèmes d'absorption selon l'invention fonctionnent suite à un choc du véhicule automobile contre un élément extérieur. Lesdits systèmes subissent une première phase d'armement consistant à remplir de gaz la chambre d'amortissement avant que le piston n'esquisse le moindre déplacement. Lorsque par exemple le système selon l'invention est utilisé pour amortir le mouvement du bouclier en cas de choc frontal comme précisé ci-dessus, le déplacement du bouclier solidaire du piston du dispositif, provoque un déplacement dudit piston et la chambre d'amortissement remplie de gaz amortit alors la course dudit piston.

Pour la bonne compréhension du texte il faut distinguer deux catégories de systèmes d'adaptation selon l'invention :
- ceux à une seule phase de fonctionnement
- ceux à deux paliers de fonctionnement. Ceux-ci se distinguent de ceux de la première catégorie par le fait qu'en milieu de course du piston, une nouvelle série de charges pyrotechniques est mise à feu pour accroître la pression dans la chambre d'amortissement et durcir l'amortissement dudit piston. Les caractéristiques du premier palier de fonctionnement sont en tout point identiques à celles de la phase de fonctionnement de la première catégorie de système d'absorption. Le deuxième palier commence dès la mise à feu de la nouvelle série de charges pyrotechniques.

Les notions "d'amortissement" et "d'absorption" sont identiques.

Avantageusement une chambre secondaire sépare la chambre d'amortissement et le générateur de gaz pyrotechnique et un clapet anti-retour isole les deux chambres.

De façon préférentielle, le clapet anti-retour ne permet le passage des gaz que dans le sens allant de la chambre secondaire vers la chambre d'amortissement. De cette manière, en cas de surpression dans la chambre d'amortissement, les gaz ne pourront pas remonter dans la chambre secondaire.

De façon avantageuse, les gaz émis dans la chambre secondaire modifient les paramètres de fonctionnement du dispositif de régulation de pression.

Préférentiellement le dispositif de régulation de pression est en liaison avec la chambre secondaire et les gaz émis dans ladite chambre secondaire exercent une pression sur ledit dispositif. Ainsi, le dispositif de régulation de pression relie à la fois la chambre d'amortissement et la chambre secondaire située en amont de celle-ci. Ledit dispositif est conditionné par la pression régnant dans la chambre secondaire avant d'agir au niveau de la chambre d'amortissement.

Avantageusement, la chambre d'amortissement et la chambre secondaire exercent chacune une pression sur le dispositif de régulation de pression selon une même direction mais en sens opposé.

De façon préférentielle, le dispositif de régulation de pression est logé dans un canal reliant la chambre d'amortissement à la chambre secondaire, ledit canal possédant une ouverture sur l'extérieur.

Avantageusement, le dispositif de régulation de pression est une soupape constituée par un ressort central comportant à chacune de ses extrémités une pièce d'obturation.

De façon préférentielle, la pièce d'obturation de la chambre d'amortissement est constituée par une boule et la pièce d'obturation de la chambre secondaire est constituée par un piston secondaire.

Selon un premier mode de réalisation préféré de l'invention, le générateur de gaz comprend une pluralité de charges pyrotechniques.

De façon avantageuse, un dispositif d'allumage permet d'initier les charges pyrotechniques indépendamment les unes des autres.

Préférentiellement, le dispositif d'allumage peut initier plusieurs charges pyrotechniques simultanément.

Avantageusement, le dispositif d'allumage peut initier les charges pyrotechniques avec un décalage temporel. De cette manière, la présence de plusieurs charges pyrotechniques au sein d'un même système d'absorption permet une grande souplesse d'utilisation de celui-ci, puisque le dispositif d'allumage qui lui est associé permet, d'une part, de sélectionner les charges pyrotechniques à initier en combustion et, d'autre part, de définir leur chronologie d'initiation. Ainsi les charges peuvent être initiées simultanément ou avec des décalages temporels paramétrables pour améliorer les conditions de fonctionnement du dispositif d'absorption.

De façon avantageuse, les charges pyrotechniques impliquées dans le système d'absorption selon l'invention ont toutes des caractéristiques différentes que ce soit au niveau de leur composition chimique, de leur géométrie, de leur dimension ou de leur masse. Les caractéristiques du dispositif d'allumage associées aux caractéristiques des charges pyrotechniques offrent ainsi une multiplicité de combinaisons permettant de traiter un très grand nombre de configurations.

De façon préférentielle, les charges sont disposées chacune dans un logement muni d'un opercule claquable.

De façon avantageuse, les opercules sont dimensionnés pour résister à la pression de la chambre secondaire et claquer seulement sous la pression d'allumage des charges correspondantes.

Selon un autre mode de réalisation préféré de l'invention, le générateur de gaz comprend une charge pyrotechnique logée dans une chambre de combustion munie d'un opercule, et un dispositif d'obturation de ladite chambre. De cette manière, après la mise en combustion de la charge pyrotechnique, le dispositif d'obturation est déclenché pour fermer la chambre de combustion et stopper la production de gaz dans la chambre secondaire. Les gaz s'accumulent dans la chambre de combustion et finissent par provoquer la rupture de l'opercule permettant alors leur évacuation vers l'extérieur.

Avantageusement, le dispositif d'obturation comprend un générateur de gaz pyrotechnique et une pièce mobile apte à se déplacer sous l'effet desdits gaz pour obturer la chambre de combustion. Il s'agit d'une pièce tiroir qui coulisse dans une enceinte sous l'effet des gaz émis par un générateur de gaz pour venir obturer la chambre de combustion.

L'invention porte également sur un procédé d'amortissement à 2 paliers impliquant un système d'absorption selon l'invention caractérisé en ce que,
i) dans une première phase, une partie des charges pyrotechniques est mise à feu provoquant, d'une part, la mise sous contrainte du dispositif de régulation de pression et, d'autre part, la mise sous pression de la chambre d'amortissement,
ii) dans une deuxième phase, lorsque la pression dans la chambre d'amortissement, dont le volume diminue sous l'effet du déplacement du piston soumis à une sollicitation externe, atteint une valeur seuil, le dispositif de régulation de pression dont les caractéristiques dépendent de la pression dans la chambre secondaire se déclenche pour évacuer des gaz et maintenir une pression constante dans la chambre d'amortissement, le clapet anti-retour empêchant toute remontée des gaz dans la chambre secondaire,
iii) dans une troisième phase, d'autres charges pyrotechniques du générateur sont mises à feu pour accroître la pression dans la chambre d'amortissement et donc augmenter l'amortissement dudit piston, les évènements de la deuxième phase du procédé se répétant lors de cette troisième phase.

Les dispositifs d'absorption d'énergie selon l'invention présentent le double avantage d'être peu encombrants et d'une grande efficacité. Ils sont peu encombrants dans la mesure où le système d'amortissement n'existe pas tant que le générateur de gaz n'est pas déclenché et est créé sous forme d'un afflux gazeux ne nécessitant pas l'intervention de pièces solides supplémentaires spécialement conçues pour cette fonction d'amortissement. Ils sont d'une grande modularité, car la multiplicité des charges pyrotechniques mises en jeu permet une bonne maîtrise de la pression initiale d'amortissement, celle-ci pouvant entre autre être adaptée à la morphologie du conducteur et à la vitesse du véhicule automobile au moment du choc. Enfin les dispositifs d'absorption selon l'invention sont de conception simple, car le dispositif de régulation de pression de la chambre d'amortissement est conditionné par une source gazeuse déjà existante.

On donne, ci-après, la description détaillée de trois modes de réalisation préférés de l'invention en se référant aux figures 1 à 9.

La figure 1 est une vue schématique en coupe axiale d'un système d'absorption selon l'invention muni d'un générateur de gaz à quatre charges pyrotechniques.

Les figures 2, 3 et 4 représentent le système d'absorption de la figure 1 à différents stades de son fonctionnement.

Les figures 5, 6 représentent le système d'absorption de la figure 1 à deux stades différents d'un deuxième palier de fonctionnement.

La figure 7 est une vue d'un générateur de gaz pyrotechnique à une charge d'un système d'absorption selon l'invention.

La figure 8 est une vue d'un générateur de gaz pyrotechnique à deux charges d'un système d'absorption selon l'invention ayant un fonctionnement à deux paliers.

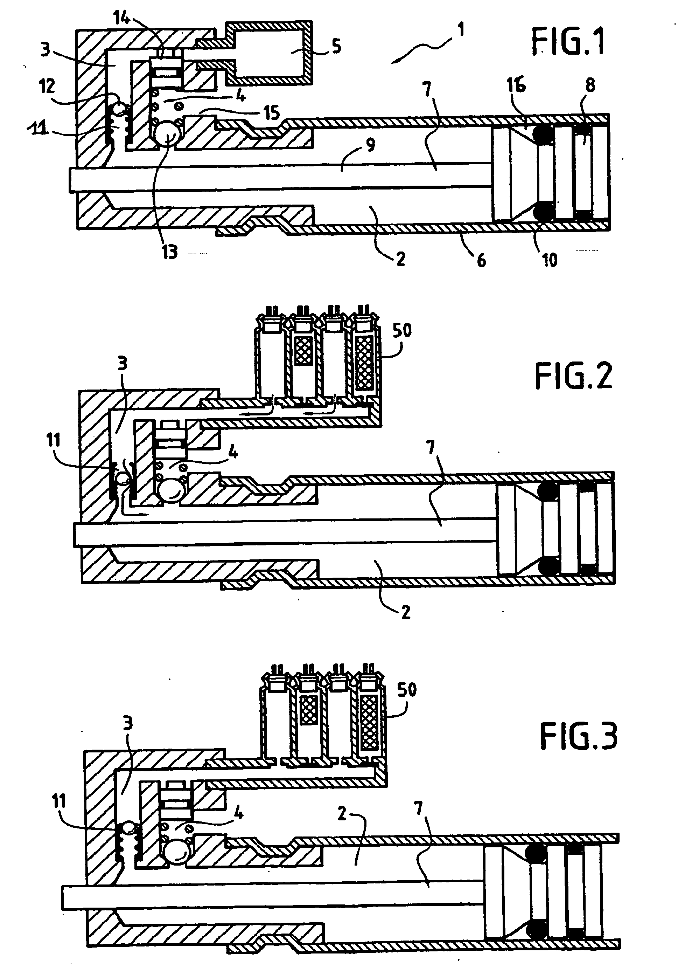

En se référant à la figure 1, un système 1 d'absorption selon l'invention comprend une chambre d'amortissement 2, une chambre secondaire 3, un dispositif de régulation de pression 4 et un générateur de gaz 5. La chambre d'amortissement 2 est délimitée par un cylindre creux 6 dans lequel est logé un piston 7 présentant un corps 8 cylindrique prolongé par une tige cylindrique 9 de plus faible diamètre, le diamètre dudit corps 8 étant sensiblement inférieur au diamètre interne de la chambre d'amortissement 2. Le piston 7 comporte un dispositif anti-retour sous la forme de billes 10 insérées dans un espacement 16 situé entre le corps 8 du piston 7 et la paroi interne de la chambre d'amortissement 2. Il s'agit d'un espacement annulaire 16 possédant une section variable, dont une partie peut recevoir une bille 10.

La chambre secondaire est cylindrique et a une forme en L présentant deux parties cylindriques perpendiculaires l'une par rapport à l'autre et de diamètres différents. Ladite chambre secondaire 3 est reliée à la chambre 2 d'amortissement de sorte que les deux chambres 2, 3 ont une forme globale en U. A son extrémité qui vient en communication avec la chambre d'amortissement 2, la chambre secondaire 3 comporte un clapet 11 anti-retour matérialisé par un ressort et une boule 12 enfermée dans un cylindre creux muni à chacune de ses deux extrémités d'une ouverture, de sorte que la boule 12 obture l'une des deux ouvertures sous l'effet du ressort qui est légèrement précontraint, le diamètre de ladite boule 12 étant supérieur au diamètre de l'ouverture contre laquelle elle vient en appui. Par rapport à la chambre secondaire 3, la boule 12 est placée en amont du ressort. Autrement dit, les deux chambres 2, 3 sont isolées l'une de l'autre par ledit clapet 11. Le dispositif de régulation de pression 4 est placé dans un canal reliant la chambre d'amortissement 2 et la partie de la chambre secondaire 3 qui est parallèle à ladite chambre d'amortissement 2. Le canal dans lequel est logé le dispositif de régulation de pression 4 et la partie de la chambre secondaire 3 comportant le clapet 11 sont parallèles entre eux et sont perpendiculaires à la chambre d'amortissement 2 ainsi qu'à l'autre partie de la chambre secondaire 3. Le dispositif de régulation de pression 4 est constitué par une soupape d'échappement, comprenant un ressort central ayant à chacune de ses extrémités une pièce d'obturation, constituée par une boule 13 pour celle qui obture la chambre d'amortissement 2 et constituée par un piston 14 secondaire pour celle qui obture la chambre secondaire 3. Le ressort central est légèrement précontraint et repousse à la fois la boule 13 et le piston 14 secondaire. Le canal logeant le dispositif de régulation de pression 4 présente dans sa partie centrale, qui est la partie logeant le ressort, une ouverture 15 sur l'extérieur du système 1 d'absorption. Le générateur 5 de gaz pyrotechnique est relié à l'extrémité libre de la chambre secondaire 3.

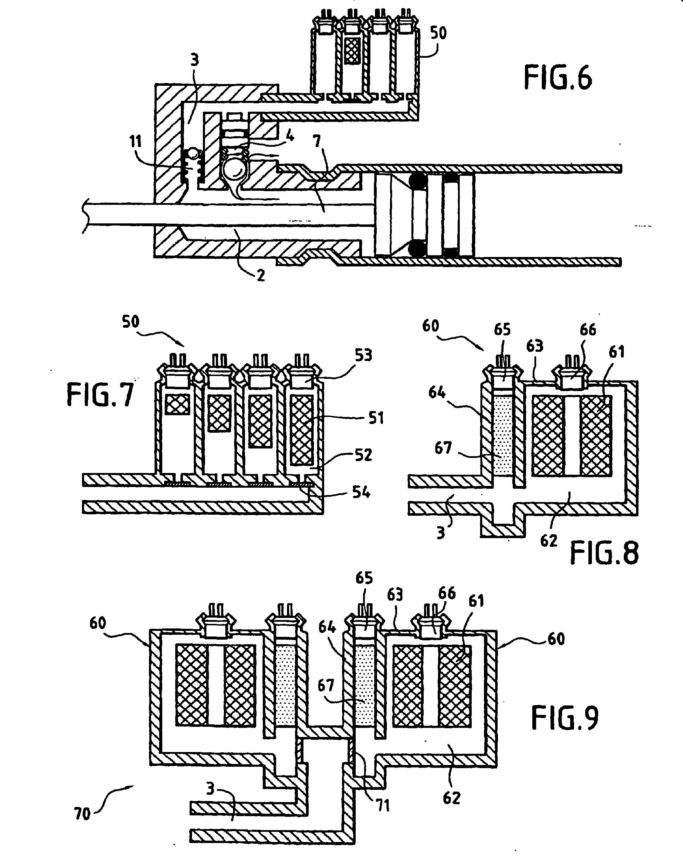

En se référant à la figure 7, selon un premier mode de réalisation préféré de l'invention, le générateur 50 présente quatre charges pyrotechniques 51 logées chacune dans un logement cylindrique 52 comprenant à l'une de leurs extrémités un dispositif d'allumage 53 et à l'autre extrémité un opercule de claquage 54 calibré pour se rompre sous l'effet de la pression d'allumage mais pour résister à la pression de la chambre secondaire 3.

En se référant à la figure 8, selon un deuxième mode de réalisation préféré de l'invention, le générateur 60 comprend une charge pyrotechnique 61 logée dans une chambre de combustion 62 munie d'un opercule claquable 63 et d'un système d'allumage 66, et un dispositif d'obturation 64 de ladite chambre 62. Le dispositif d'obturation 64 possède un générateur de gaz 65 et une pièce tiroir 67 apte à se déplacer sous l'effet des gaz émis par ledit générateur 65 pour fermer la chambre de combustion 62. Le générateur 60 débouche sur la chambre secondaire 3.

En se référant à la figure 9, selon un troisième mode de réalisation préféré de l'invention, le générateur 70 comprend deux générateurs 60 du type de celui représenté à la figure 8, accolés l'un à l'autre et débouchant tous les deux sur la chambre secondaire 3. Chacun des deux générateurs 60 possède en amont de la chambre secondaire 3 un opercule claquable 71 permettant d'éviter l'initiation en combustion de l'un des deux générateurs 60 par l'autre générateur 60.

Le mode de fonctionnement d'un système d'absorption selon l'invention, comprenant les trois modes de réalisation précédemment décrits, est le suivant.

Selon le premier mode de réalisation préféré de l'invention, en se référant à la figure 2, deux des quatre charges pyrotechniques 51 du générateur 50 sont mises en combustion, provoquant l'ouverture des opercules 54 de leur logement respectif 52. Les gaz envahissent la chambre secondaire 3 suivant les flèches de la figure puis passent par le clapet 11 suivant la flèche avant d'envahir la chambre d'amortissement 2. La pression de la chambre secondaire 3 agit sur le cylindre secondaire 14 du dispositif de régulation de pression 4, accentuant la compression du ressort central dudit dispositif 4 et augmentant la force d'appui de la boule 13 qui obture la chambre d'amortissement 2.

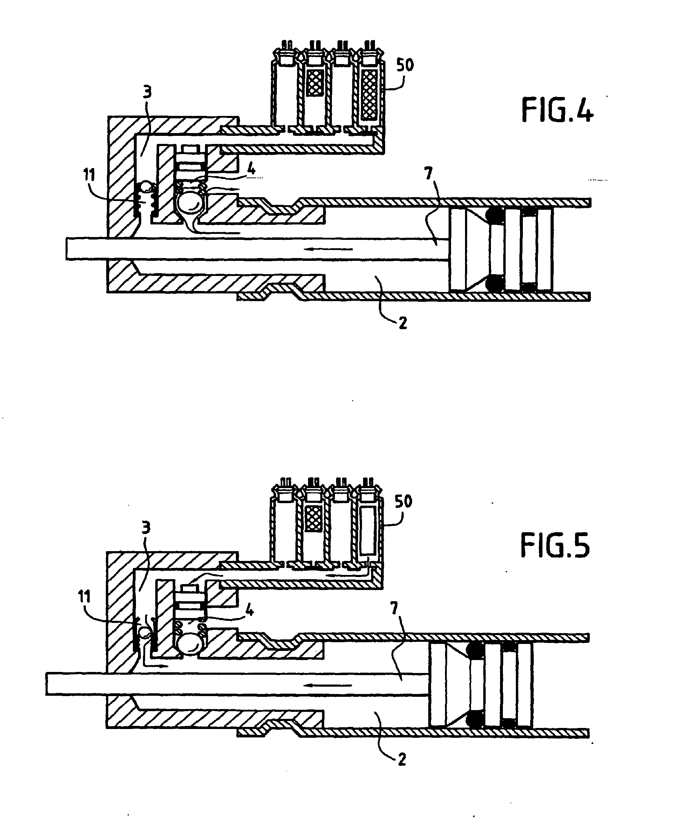

Il s'agit de la phase d'armement du système d'absorption 1. Le système selon l'invention sera par exemple utilisé comme absorbeur du déplacement du bouclier d'un véhicule automobile subissant un choc frontal. Lors de l'accident, tout d'abord, le bouclier avance en direction de l'élément extérieur contre lequel le choc se produit. Sous l'effet de l'impact du véhicule, le bouclier est ensuite amorti grâce au système d'absorption selon l'invention. En se référant à la figure 3, lors de l'impact, le bouclier subit donc un déplacement brutal entraînant le piston 7 dont il est solidaire, selon un sens qui accentue la sortie de sa tige 9 vers l'extérieur de la chambre d'amortissement 2. En se référant à la figure 4, la chambre d'amortissement 2 se comprime alors sous l'effet du déplacement du piston 7 et, au delà d'une pression seuil à l'intérieur de ladite chambre 2, la boule 13 est repoussée, créant une ouverture pour les gaz qui s'échappent alors par l'ouverture 15 du canal logeant le dispositif de régulation de pression 4. L'amortissement dudit piston 7 s'effectue à pression constante.

Les systèmes d'absorption ayant deux paliers de fonctionnement présentent une phase supplémentaire qui suit la phase précédemment décrite. En se référant à la figure 5, cette deuxième phase commence lors de la mise à feu d'une troisième charge pyrotechnique 51, alors que le piston 7 continue sa course dans la chambre 2 mise sous pression par les gaz issus de la combustion des premières charges pyrotechniques 51. Les gaz fournis par la combustion de cette charge 51 supplémentaire parviennent à la chambre d'amortissement 2, après avoir refermé le dispositif de régulation de pression 4 par l'intermédiaire de la pression exercée sur ledit dispositif 4 par les gaz nouvellement produits dans la chambre secondaire 3. En se référant à la figure 6, cet afflux de gaz supplémentaire dans la chambre de d'amortissement 2 augmente l'amortissement du piston 7 et provoque à nouveau le déclenchement du dispositif de régulation de pression 4 pour évacuer une partie du gaz de ladite chambre 2. Durant cette deuxième phase, l'amortissement du piston 7 est accru et s'effectue à pression constante.

Le mode de fonctionnement du deuxième mode de réalisation préféré de l'invention, diffère de celui du premier mode de réalisation précédemment décrit, au niveau de la fourniture des gaz par le générateur pyrotechnique, toutes les autres phases étant identiques. En se référant à la figure 8, la charge 61 pyrotechnique située dans la chambre de combustion 62 est mise à feu par le système d'allumage 66 et les gaz fournis envahissent alors la chambre secondaire 3. Au bout d'un temps prédéterminé, le dispositif d'obturation 64 se déclenche sous l'effet de la mise à feu de son générateur 65 de gaz, provoquant le déplacement de la pièce tiroir 67 dans un espace de coulissement pour fermer la chambre de combustion 62. Les gaz s'accumulent alors dans ladite chambre 62 et finissent par rompre l'opercule 63 pour s'évacuer vers l'extérieur. Avec un tel générateur de gaz 60, qui permet d'émettre une quantité variable de gaz en fonction de l'instant de déclenchement du dispositif d'obturation 64, le système d'absorption selon l'invention ne peut avoir qu'une seule phase de fonctionnement.

Le mode de fonctionnement du troisième mode de réalisation préféré de l'invention diffère de celui du premier mode de réalisation précédemment décrit concernant un système d'absorption à deux paliers de fonctionnement, au niveau de la fourniture des gaz par le générateur pyrotechnique 70, toutes les autres phases étant identiques. En se référant à la figure 9, la première phase est pilotée par la combustion du premier générateur de gaz 60 conformément à la description faite pour le deuxième mode de réalisation préféré de l'invention. La deuxième phase est pilotée par la combustion du deuxième générateur 60 de gaz qui est analogue au premier générateur.

Comme décrit précédemment, le système d'absorption selon l'invention pourra être adapté pour différentes applications, comme par exemple pour amortir le mouvement d'un capot d'un véhicule automobile lorsqu'un piéton percute ledit capot, pour amortir le mouvement d'une colonne direction créé par l'impact du conducteur contre ladite colonne ou pour moduler, lors d'un impact, l'effort exercé par un occupant d'un véhicule sur sa ceinture de sécurité.

## Revendications

1. Système d'absorption d'énergie (1) pour dispositifs de sécurité dans un véhicule automobile comprenant un générateur de gaz pyrotechnique (5, 50, 60, 70) et un piston de coulissement (7) pouvant se déplacer dans une chambre d'amortissement (2) ledit générateur (5, 50, 60, 70) étant apte à libérer des gaz dans ladite chambre (2) pour amortir le piston (7), **caractérisé en ce que** le générateur de gaz (5, 50, 60, 70) délivre une quantité variable de gaz et **en ce que** la chambre d'amortissement (2) comporte un dispositif de régulation de pression (4) qui se déclenche au delà d'une pression seuil.

2. Système d'absorption selon la revendication 1, **caractérisé en ce qu**'une chambre secondaire (3) sépare la chambre d'amortissement (2) et le générateur de gaz (5, 50, 60, 70) pyrotechnique, et en ce qu'un clapet (11) anti-retour isole les deux chambres (2, 3).

3. Système d'absorption selon la revendication 2, **caractérisé en ce que** le dispositif de régulation de pression (4) est en liaison avec la chambre secondaire (3) et **en ce que** les gaz émis dans ladite chambre (3) secondaire exercent une pression sur ledit dispositif (4).

4. Système d'absorption selon la revendication 2 ou 3, **caractérisé en ce que** les gaz émis dans la chambre secondaire (3) modifient les paramètres de fonctionnement du dispositif de régulation de pression (4).

5. Système d'absorption selon la revendication 3 ou 4, **caractérisé en ce que** la chambre d'amortissement (2) et la chambre secondaire (3) exercent chacune sur le dispositif de régulation de pression (4) une pression selon une même direction mais en sens opposé.

6. Système d'absorption selon l'une quelconque des revendications 3 à 5, **caractérisé en ce que** le dispositif de régulation de pression (4) est logé dans un canal reliant la chambre d'amortissement (2) à la chambre secondaire (3), ledit canal possédant une ouverture (15) sur l'extérieur.

7. Système d'absorption selon l'une quelconque des revendication 2 a 6, **caractérisé en ce que** le clapet (11) anti-retour ne permet le passage des gaz que dans le sens allant de la chambre secondaire (3) vers la chambre d'amortissement (2).

8. Système d'absorption selon l'une quelconque des revendications 1 à 7, **caractérisé en ce que** le dispositif de régulation de pression (4) est une soupape constituée par un ressort central comportant à chacune de ses extrémités une pièce d'obturation (13, 14).

9. Système d'absorption selon la revendication 8, **caractérisé en ce que** la pièce d'obturation de la chambre d'amortissement (2) est constituée par une boule (13) et **en ce que** la pièce d'obturation de la chambre secondaire (3) est constituée par un piston secondaire (14).

10. Système d'absorption selon l'une quelconque des revendications 1 à 9, **caractérisé en ce que** le générateur de gaz comprend une pluralité (50) de charges pyrotechniques (51).

11. Système d'absorption selon la revendication 10, **caractérisé en ce qu**'un dispositif d'allumage permet d'initier les charges pyrotechniques (51) indépendamment les unes des autres.

12. système d'absorption selon la revendication 11, **caractérisé en ce que** le dispositif d'allumage peut initier plusieurs charges pyrotechniques (51) simultanément.

13. Système d'absorption selon la revendication 11, **caractérisé en ce que** le dispositif d'allumage peut initier les charges pyrotechniques (51) avec un décalage temporel.

14. Système d'absorption selon l'une quelconque des revendications 10 à 13, **caractérisé en ce que** les charges pyrotechniques (51) ont des caractéristiques différentes.

15. Système d' absorption selon l'une quelconque des revendications 10 à 14, **caractérisé en ce que** les charges (51) sont disposées chacune dans un logement (52) muni d'un opercule claquable (54).

16. Système d'absorption selon l'une quelconque des revendications 1 à 9, **caractérisé en ce que** le générateur de gaz (60) comprend une charge pyrotechnique (61) logée dans une chambre de combustion (62) munie d'un opercule (63), et un dispositif d'obturation (64) de ladite chambre (62).

17. Système d'absorption selon la revendication 16, **caractérisé en ce que** le dispositif d'obturation (64) comprend un générateur de gaz pyrotechnique (65) et une pièce tiroir (67) apte à se déplacer sous l'effet desdits gaz pour obturer la chambre de combustion (62).

18. Procédé d'amortissement à 2 paliers impliquant une système d'absorption (1) selon l'une quelconque des revendications 10 à 15, **caractérisé en ce que**,
i) dans une première phase, au moins une charge pyrotechnique (51, 61) est mise à feu provoquant, d'une part, la mise sous contrainte du dispositif de régulation de pression (4) et d'autre part, la mise sous pression de la chambre d'amortissement (2),
ii) dans une deuxième phase, lorsque la pression dans la chambre d'amortissement (2) dont le volume diminue sous l'effet du déplacement du piston (7) soumis à une sollicitation externe, atteint une valeur seuil, le dispositif de régulation de pression (4) dont les caractéristiques dépendent de la pression dans la chambre secondaire (3), se déclenche pour évacuer des gaz et maintenir une pression constante dans la chambre d'amortissement (2), le clapet anti-retour (11) empêchant toute remontée des gaz dans la chambre secondaire (3),
iii) dans une troisième phase, d'autres charges pyrotechniques (51, 61) des générateurs (50, 70) sont mises à feu pour accroître la pression dans la chambre d'amortissement (2) et donc augmenter l'amortissement dudit piston (7), les évènements de la deuxième phase du procédé se répétant lors de cette troisième phase.

19. Utilisation du système d'absorption selon l'une quelconque des revendications 1 à 17 pour amortir un bouclier d'un véhicule automobile en cas de choc frontal du véhicule.

20. Utilisation du système d'absorption selon l'une quelconque des revendication 1 à 17, pour protéger les membres inférieurs d'un occupant d'un véhicule automobile.

21. Utilisation du système d'absorption selon l'une quelconque des revendications 1 à 17 pour amortir l'impact d'un piéton contre le capot d'un véhicule automobile.

22. Utilisation du système d'absorption selon l'une quelconque des revendications 1 à 17 pour amortir une colonne de direction d'un véhicule automobile.

## Claims

1. Energy absorption system (1) for safety devices in a motor vehicle, comprising a pyrotechnic gas generator (5, 50, 60, 70) and a sliding piston (7) that can be displaced in a damping chamber (2), the said generator (5, 50, 60, 70) being able to release gas into the said chamber (2) for damping the piston (7), **characterized in that** the gas generator (5, 50, 60, 70) delivers a variable quantity of gas and **in that** the damping chamber (2) comprises a pressure-regulating device (4) that is triggered above a threshold pressure.

2. The absorption system according to claim 1, **characterized in that** a secondary chamber (3) separates the damping chamber (2) and the pyrotechnic gas generator (5, 50, 60, 70), and **in that** a non-return valve (11) isolates the two chambers (2, 3).

3. The absorption system according to claim 2, **characterized in that** the pressure regulating device (4) is in connection with the secondary chamber (3) and **in that** the gas emitted into the said secondary chamber (3) exerts a pressure on the said device (4).

4. The absorption system according to claim 2 or 3, **characterized in that** the gas emitted into the secondary chamber (3) modifies the operating parameters of the pressure-regulating device (4).

5. The absorption system according to claim 3 or 4, **characterized in that** the damping chamber (2) and the secondary chamber (3) each exert on the pressure-regulating device (4) a pressure with the same direction but oppositely directed effect.

6. The absorption system according to any one of claims 3 to 5, **characterized in that** the pressure-regulating device (4) is housed in a channel connecting the damping chamber (2) to the secondary chamber (3), the said channel having an opening (15) to the outside.

7. The absorption system according to any one of claims 2 to 6, **characterized in that** the non-return valve (11) only allows the gas to pass through in the outward direction from the secondary chamber (3) towards the damping chamber (2).

8. The absorption system according to any one of claims 1 to 7, **characterized in that** the pressure-regulating device (4) is a valve consisting of a central spring comprising a closing part (13, 14) at each of its ends.

9. The absorption system according to claim 8, **characterized in that** the part for closing off the damping chamber (2) consists of a ball (13) and **in that** the part for closing off the secondary chamber (3) consists of a secondary piston (14).

10. The absorption system according to any one of claims 1 to 9, **characterized in that** the gas generator comprises a plurality (50) of pyrotechnic charges (51).

11. The absorption system according to claim 10, **characterized in that** an ignition device makes it possible to ignite the pyrotechnic charges (51) independently of one another.

12. The absorption system according to claim 11, **characterized in that** the ignition device can ignite several pyrotechnic charges (51) simultaneously.

13. The absorption system according to claim 11, **characterized in that** the ignition device can ignite the pyrotechnic charges (51) with a time delay.

14. The absorption system according to any one of claims 10 to 13, **characterized in that** the pyrotechnic charges (51) have different characteristics.

15. The absorption system according to any one of claims 10 to 14, **characterized in that** the charges (51) are each arranged in a housing (52) provided with a burstable cover (54).

16. The absorption system according to any one of claims 1 to 9, **characterized in that** the gas generator (60) comprises a pyrotechnic charge (61) housed in a combustion chamber (62) provided with a cover (63), and a device (64) for closing off the said chamber (62).

17. The absorption system according to claim 16, **characterized in that** the closing device (64) comprises a pyrotechnic gas generator (65) and a slide part (67) capable of being displaced under the effect of the said gas in order to close off the combustion chamber (62).

18. Damping method operating at 2 levels and involving an absorption system (1) according to any one of claims 10 to 15,
**characterized in that**
i) in a first phase, at least one pyrotechnic charge (51, 61) is fired, placing the pressure-regulating device (4) under stress on the one hand and pressurizing the damping chamber (2) on the other hand,
ii) in a, second phase, when the pressure in the damping chamber (2), the volume of which decreases under the effect of the displacement of the piston (7) subjected to an external stress, reaches a threshold value, the pressure-regulating device (4), the characteristics of which depend on the pressure in the secondary chamber (3), is triggered in order to evacuate gas and maintain a constant pressure in the damping chamber (2), the non-return valve (11) preventing any flow of gas back up into the secondary chamber (3),
iii) in a third phase, other pyrotechnic charges (51, 61) of the generators (50, 70) are fired in order to increase the pressure in the damping chamber (2) and therefore increase the damping of the said piston (7), the events of the second phase of the method being repeated during this third phase.

19. Use of the absorption system according to any one of claims 1 to 17, for damping a bumper of a motor vehicle in the event of a head-on collision of the vehicle.

20. Use of the absorption system according to any one of claims 1 to 17 for protecting the lower limbs of an occupant of a motor vehicle.

21. Use of the absorption system according to any one of claims 1 to 17 for damping the impact of a pedestrian against the bonnet of a motor vehicle.

22. Use of the absorption system according to any one of claims 1 to 17 for damping a steering column of a motor vehicle.

## Patentansprüche

1. Energieabsorptionssystem (1) für Sicherheitsvorrichtungen in einem Kraftfahrzeug, umfassend einen Generator eines pyrotechnischen Gases (5, 50, 60, 70) und einen verschiebbaren Kolben (7), der in der Lage ist, sich in einer Dämpferkammer (2) zu bewegen, wobei der Generator (5, 50, 60, 70) geeignet ist, Gase in die Kammer (2) freizusetzen, um den Kolben zu dämpfen, **dadurch gekennzeichnet, daß** der Gasgenerator (5, 50, 60, 70) eine variable Gasmenge liefert und, daß die Dämpferkammer (2) eine Druckregelungsvorrichtung (4) umfaßt, die sich ab einem Schwelldruck auslöst.

2. Absorptionssystem nach Anspruch 1, **dadurch gekennzeichnet, daß** eine sekundäre Kammer (3) die Dämpferkammer (2) und den Generator pyrotechnischen Gases (5, 50, 60, 70) trennt und, daß ein Rückschlagventil (11) die zwei Kammern (2, 3) isoliert.

3. Absorptionssystem nach Anspruch 2, **dadurch gekennzeichnet, daß** die Druckregelungsvorrichtung (4) in Verbindung ist mit der sekundären Kammer (3) und, daß die in die sekundäre Kammer emittierten Gase einen Druck auf die Vorrichtung (4) ausüben.

4. Absorptionssystem nach einem der Ansprüche 2 oder 3, **dadurch gekennzeichnet, daß** die in die sekundäre Kammer (3) emittierten Gase die Betriebsparameter der Druckregelungsvorrichtung (4) modifizieren.

5. Absorptionssystem nach einem der Ansprüche 3 oder 4, **dadurch gekennzeichnet, daß** jede der Dämpferkammer (2) und der sekundären Kammer (3) einen Druck auf die Druckregelungsvorrichtung (4) ausübt gemäß einer selben Linie aber in gegensätzliche Richtungen.

6. Absorptionssystem nach einem der Ansprüche 3 bis 5, **dadurch gekennzeichnet, daß** die Druckregelungsvorrichtung (4) in einem Kanal eingesetzt ist, der die Dämpferkammer (2) mit der sekundären Kammer (3) verbindet, wobei der Kanal außen eine Öffnung (15) aufweist.

7. Absorptionssystem nach einem der Ansprüche 2 bis 6, **dadurch gekennzeichnet, daß** das Rückschlagventil (11) den Durchgang der Gase nur in die Richtung von der sekundären Kammer (3) zur Dämpferkammer (2) erlaubt.

8. Absorptionssystem nach einem der Ansprüche 1 bis 7, **dadurch gekennzeichnet, daß** die Druckregelungsvorrichtung (4) ein Ventil ist, das aus einer zentralen Feder besteht, die an jedem ihrer Enden ein Verschlußteil (13, 14) umfaßt.

9. Absorptionssystem nach Anspruch 8, **dadurch gekennzeichnet, daß** das Verschlußteil der Dämpferkammer (2) aus einer Kugel (13) besteht und, daß das Verschlußteil der sekundären Kammer (3) aus einem sekundären Kolben (14) besteht.

10. Absorptionssystem nach einem der Ansprüche 1 bis 9, **dadurch gekennzeichnet, daß** der Gasgenerator eine Mehrzahl (50) pyrotechnischer Ladungen (51) umfaßt.

11. Absorptionssystem nach Anspruch 10, **dadurch gekennzeichnet, daß** eine Zündvorrichtung es erlaubt, die pyrotechnischen Ladungen (51) unabhängig voneinander zu zünden.

12. Absorptionssystem nach Anspruch 11, **dadurch gekennzeichnet, daß** die Zündvorrichtung in der Lage ist, mehrere pyrotechnische Ladungen (51) simultan zu zünden.

13. Absorptionssystem nach Anspruch 11, **dadurch gekennzeichnet, daß** die Zündvorrichtung in der Lage ist, die pyrotechnischen Ladungen (51) mit einer Zeitverzögerung zu zünden.

14. Absorptionssystem nach einem der Ansprüche 10 bis 13, **dadurch gekennzeichnet, daß** die pyrotechnischen Ladungen (51) unterschiedliche Merkmale aufweisen.

15. Absorptionssystem nach einem der Ansprüche 10 bis 14, **dadurch gekennzeichnet, daß** jede Ladung (51) in einem Aufnahmeraum (52) eingesetzt ist, der mit einem klappbaren Verschlussorgan (54) versehen ist.

16. Absorptionssystem nach einem der Ansprüche 1 bis 9, **dadurch gekennzeichnet, daß** der Gasgenerator (60) eine pyrotechnische Ladung (61) umfasst, die in einer Brennkammer (62) eingesetzt ist, die mit einem Verschlußorgan (63) versehen ist und eine Verschlußvorrichtung (64) der Kammer (62).

17. Absorptionssystem nach Anspruch 16, **dadurch gekennzeichnet, daß** die Verschlußvorrichtung (64) einen Generator pyrotechnischen Gases (65) und ein einschiebbares Teil (67) umfaßt, das in der Lage ist, sich unter der Wirkung der Gase zu bewegen, um die Brennkammer (62) zu verschließen.

18. Dämpfverfahren mit zwei Lagern, das eine Absorptionsvorrichtung (1) nach einem der Ansprüche 10 bis 15 impliziert, **dadurch gekennzeichnet, daß**
i) in einer ersten Phase, mindestens eine pyrotechnische Ladung (51, 61) gezündet wird, wobei einerseits die Belastung der Druckregelungsvorrichtung (4) und andererseits die Bedruckung der Dämpferkammer (2) verursacht werden,
ii) in einer zweiten Phase, wenn der Druck in der Dämpferkammer (2), deren Volumen unter der Wirkung der Bewegung des Kolbens (7), der eine externe Belastung erfährt, sich verringert, einen Schwellwert erreicht, die Druckregelungsvorrichtung (4), deren Merkmale von dem Druck in der sekundären Kammer (3) abhängig sind, sich auslöst, um die Gase zu evakuieren und einen konstanten Druck in der Dämpferkammer (2) zu behalten, wobei das Rückschlagventil (11) einen Rückkehr der Gase in die sekundäre Kammer (3) verhindert,
iii) in einer dritten Phase, andere pyrotechnischen Ladungen (51, 61) der Generatoren gezündet werden, um den Druck in der Dämpferkammer (2) zu steigern und damit die Dämpfung des Kolbens zu erhöhen, wobei sich die Ereignisse der zweiten Phase des Verfahrens während dieser dritten Phase wiederholen.

19. Verwendung des Absorptionssystems nach einem der Ansprüche 1 bis 17, um einen Schild eines Kraftfahrzeuges im Falle eines Frontalaufpralles des Kraftfahrzeuges zu dämpfen.

20. Verwendung des Absorptionssystems nach einem der Ansprüche 1 bis 17, um die unteren Körperglieder eines Autoinsassen zu schützen.

21. Verwendung des Absorptionssystems nach einem der Ansprüche 1 bis 17, um den Aufschlag eines Fußgängers gegen die Motorhaube eines Kraftfahrzeuges zu dämpfen.

22. Verwendung des Absorptionssystems nach einem der Ansprüche 1 bis 17, um eine Lenksäule eines Kraftfahrzeuges zu dämpfen.
